# EUROPEAN PATENT SPECIFICATION

(11) **EP 2 748 501 B1**
(45) Date of publication and mention of the grant of the patent: **21.09.2016**
(21) Application number: 12827526.0
(22) Date of filing: 11.07.2012
(51) Int. Cl.: F16L 59/135, F16L 59/12

(54) **PIPE ANCHOR**
ROHRANKER
ANCRAGE DE TUYAU

(30) Priority: 26.08.2011 US 201113219206
(43) Date of publication of application: 02.07.2014
(73) Proprietor: Rilco Manufacturing Company, Inc., Houston, TX 77041 (US)
(72) Inventor: ZAGORSKI, Kenneth, Houston, TX 77041 (US); DONOGHUE, Joseph, A., Houston, TX 77041 (US); BOCK, Michael, E., Houston, TX 77041 (US)
(74) Representative: Manley, Nicholas Michael
(86) International application number: PCT/US2012/046157
(87) International publication number: WO 2013/032583

(56) References cited:
- WO-A1-2010/089328
- US-A- 3 980 262
- US-A- 4 804 158
- US-A- 5 749 548
- US-A1- 2005 253 024
- US-A1- 2008 272 248
- US-B2- 7 472 879
- US-B2- 7 861 983

## Description

### Background of the Invention:

Typical pipe anchor supports use lugs or plates attached to the pipe. These lugs encircle the pipe and transmit the forces generated by the pipe movement from the pipe lugs, through the insulation, and to an opposing lug welded to a housing. There are serious design shortcomings when using this arrangement. In such environments, the insulation cross section width has to be great enough to allow sufficient compressive area to resist the compressive axial forces generated by the pipe and the stresses under which the pipe is held. Newer insulation materials allow for a thinner insulation cross section due to improved insulating qualities, thus greatly decreasing the area of compression to the point that typically pipe lugs will not function properly.

US 5 749 548 discloses a thermal insulating support device for piping comprises a base frame constituted by a bottom plate, a pair of side plates and a pair of end plates integrally formed with each other; a support frame of a plate shape and formed with a support hole, the support frame being fixed at a bottom of the piping; and a support shaft made of resin or ceramic material extending through the support hole of the support frame and fixedly supported by the pair of side plates on the base frame, the support shaft having thermal insulation properties and mechanical strength sufficient for supporting the piping.

WO 2010/089328 A1 discloses a cold-insulated pipe support for a pipeline, in particular for a low-temperature pipeline, comprising a pipe receptacle that delimits a receiving space for a pipe section of the pipeline and comprising a holding device for absorbing and transmitting forces and torques acting on the pipeline and on a base. The holding device comprises a stop apparatus having at least one stop element for absorbing and transmitting axial pipe forces to the pipe receptacle and/or to the base and the stop element is fixed in the installation position on a narrow-surfaced side surface on the outside of the pipeline, wherein the side surface extends longitudinally in the axial direction in the installation position and is designed as a connecting side surface. In order to apply force to the pipe receptacle, a ring element can be provided between the stop element and the pipe receptacle, wherein the ring element is brought radially over the pipeline in the form of two ring sectors, which are welded together to form the ring element.

US 2008/272248 A1 discloses a pipe support for dampening acoustic propagation from a pipeline. The pipe support can include a support base and a movable base spatially arranged from the support base. One or more fasteners can be disposed through the movable base to the support base, thereby connecting the movable base to the support base. One or more acoustic isolators can be disposed between an upper surface of the support base and a lower surface of the movable base.

US 3 980 262 discloses an insulating and load bearing support for a tubular member such as a pipe, comprising a load bearing metal member with substantially a flat bottom and sides extending substantially the length of the bottom and perpendicular to the flat bottom for resting on a support member, and bonded thereto throughout the contacting surfaces is a foamed plastic rigid load bearing substance such as high density polyurethane that is provided with an arcuate upper surface for conforming with the tubular member. The foamed plastic rigid load bearing member includes arcuate segments projecting beyond the ends of the flat bottom load bearing metal member whereby strap means may be engaged therewith for positioning the insulating and load bearing support adjacent the tubular member.

US 2005/253024 discloses a pipe anchor having a base cradle with a lug, a top cradle with a lug and secured to the base cradle so as to encircle a pipe within the base cradle and the top cradle, a locking mechanism with opposite mating components attached to the base cradle and the top cradle, at least one lug attached to the pipe and insulation material filling a space between the pipe and the cradles, wherein the insulation material engages the at least one lug of the pipe and the lugs of the cradles.

US 7 861 983 discloses a cold-insulated fixed-point pipe support for a low-temperature pipeline which includes an insulating system arranged between an outer shell and a supportable low-temperature pipeline having solid thermal insulating material which thermally insulates the pipeline from the low-temperature environment. A rotation-preventing and displacement-preventing device prevents rotation and displacement of the thermal insulating material with respect to the pipeline and an outer shell. A fixed-point pipe support is adapted to be fitted and removed in a substantially radial direction over the pipeline, and has at least one division with respect to shape with a division plane thereof extending perpendicular to a cross-sectional plane, and having a connecting device for releasable connecting and fixing shaped parts formed by the division.

### Brief Summary of the Invention:

An advantage of the present invention is to provide a clamp-on anchor that can be assembled to a pipeline in the field that positively limits the movement of the pipe section relative to the housing assembly axially, laterally, and rotationally.

In accordance with the present invention, an improved pipe trunnion stop anchor provides a unique axial restraining system. A pipe trunnion stop is welded to a process pipe to transmit the axial force generated by the pipe to a base cradle. The base cradle includes structural, thermal inserts, which isolate the pipe trunnion stop from the base assembly. The assembly also retrains the pipe trunnion stop from moving axially relative to the base assembly and retrains the pipe trunnion stop from moving laterally relative to the base assembly. There is also a vertical support for the pipe trunnion stop.

In accordance with a preferred embodiment of the invention, there is shown a pipe anchor assembly having a pipe trunnion stop having sides and bottom for attaching to an outer surface of a pipe, mating top cradle and bottom cradle portions to generally encircle and hold a length of the pipe, a pass-though in the bottom cradle to allow the pipe trunnion stop to pass through, a base onto which the bottom cradle sets, the base including a void into which the pipe trunnion stop is secured, and an insulation layer positioned on one or more sides of the pipe trunnion stop.

In accordance with a preferred embodiment of the invention, the pipe trunnion stop has a generally polygonal cross-sectional shape, an insulation layer positioned between the pipe and bottom cradle portion, an insulation layer positioned all sides and bottom of the pipe trunnion stop; and a base support having at least two stops.

In accordance with a preferred embodiment of the invention, the pipe anchor assembly further comprises at least one strap to generally encircle and hold a length of the pipe and which sets on said base a void in the base into which the pipe trunnion is secured, and an insulation void positioned around the trunnion stop in the base void.

### Brief Description of the Drawings:

The drawings constitute a part of this specification and include exemplary embodiments to the invention, which may be embodied in various forms. It is to be understood that in some instances various aspects of the invention may be shown exaggerated or enlarged to facilitate an understanding of the invention.
Figure 1 shows an exploded view of the pipe anchor assembly in accordance with a preferred embodiment of the present invention.
Figure 2 is a head on view of the pipe anchor assembly in accordance with another preferred embodiment of the present invention.

### Detailed Description of the Preferred Embodiments:

Detailed descriptions of the preferred embodiments are provided herein. It is to be understood, however, that the present invention may be embodied in various forms. Various aspects of the invention may be inverted, or changed in reference to specific part shape and detail, part location, or part composition. Therefore, specific details disclosed herein are not to be interpreted as limiting, but rather as a basis for the claims and as a representative basis for teaching one skilled in the art to employ the present invention in virtually any appropriately detailed system, structure or manner.

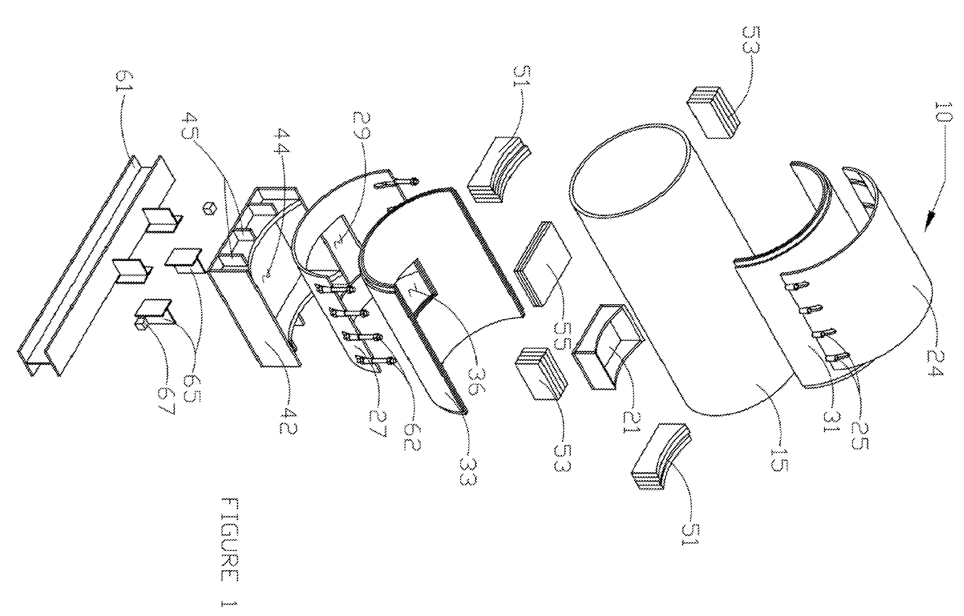

Turning first to Figure 1, there is shown a pipe anchor in accordance with the preferred embodiment of the present invention. Pipe anchor 10 is shown in the exploded view encircling a cross-sectional length of pipe 15. Pipe anchor 10 captures pipe 15 in two ways. First, pipe anchor 10 clamps to pipe 15, encircling it completely and is secured by bolting assemblies 62, described in more detail below. Simultaneously, pipe trunnion stop 21 engages with cavity 44 in the base assembly 42, also described in more detail bellow,

Pipe trunnion stop 21 is welded to pipe 15 in the preferred, illustrated embodiment, though other ways of securing pipe trunnion stop 21 to pipe 15 may be used, including intermediate tabs and bolts, brazing, and integrally fabricating the stop on the pipe section. The cross-sectional shape of pipe trunnion stop 21 is shown as rectangular, but it will be appreciated that the shape may be of a variety of shapes, depending upon the particular environment in which the pipe anchor assembly is intended to be used. The pipe trunnion stop 21 in conjunction with the opposing cavity 44 in base assembly 42 offers improved anchoring. Preferably, it will be shaped in a polygonal configuration to prevent slippage or movement within the cavity. In some embodiments, it may also be circular, oval or elliptical The base assembly 42 length and width along with pipe trunnion stop 21 length and width can be modified as required to develop sufficient area to oppose the forces generated by movement from forces to the pipe 15.

Pipe anchor 10 includes top cradle 24 and base cradle 27. Top cradle 24 includes bolting tubes 25 that mate with bolting tubes 26 on base cradle 27. By these mating bolting tubes 25, 26, pipe anchor 10 encircles pipe 15. Base cradle 27 also includes pass-through void 29 so that pipe trunnion stop 21 may pass through and be secured in base assembly 42 as illustrated. In the illustrated embodiment, there are shown eight bolting tubes 25 on top cradle 24, and eight mating bolting tubes 26 on base cradle 27, though it will be appreciated that any appropriate number of bolting tubes may be employed, depending upon the environment. Alternatively, mating top cradle 24 and base cradle 27 may be hingedly attached on one side and appropriately affixed to each other on the other side with bolts or other mechanisms known in the art.

To provide required insulation to the pipe 15 in the area of pipe anchor 10, top thermal insulation 31 is provided and located between pipe 15 and top cradle 24. Similarly, lower thermal insulation 33 is located between pipe 15 and base cradle 27. Also provided in lower thermal insulation 33 is pass-through void 36 to allow pipe trunnion stop 21 to pass through lower thermal insulation 33 and mate securely with base assembly 42 as illustrated. As can be readily appreciated, the preferred design includes a void or space for insertion of insulation about the trunnion and other areas where thermal loss may be present. Alternatively, pipe 15 may be secured to top thermal insulation 31 and lower thermal insulation 33 by encircling straps, ties, or other circumferential brackets which allow for passage of the pipe trunnion stop 21. Also, cradles may be configured to encircle pipe 15 and then bracketed or strapped to encircle pipe 15 and permit use of insulation.

Due to pipe trunnion stop 21 being attached to pipe 15, further insulation is desired. Accordingly, axial stop structural insulation 51 is shown forward and aft of the forward and rearward side walls of pipe trunnion stop 21, to insulate around pipe trunnion stop 21 and aide in axial stability of pipe 15. Similarly, lateral stop structural insulation 53 is shown adjacent lateral side walls of pipe trunnion stop 21, to provide insulation and aide in lateral stability of pipe 15. To complete insulation around pipe trunnion stop 21, there is provided vertical stop structural insulation 55, and aids in vertical stability of pipe trunnion stop 21. Axial stop insulation 51, lateral stop structural insulation 53, and vertical stop structural insulation 55 are shown in Figure 1 as separated by some distance from pipe trunnion stop 21, but it is only for illustrative purposes, and in use, are immediately adjacent the respective walls of pipe trunnion stop 21.

Continuing in Figure 1, there is shown base assembly 42 on which pipe 15, alone with pipe anchor 10, are supported. Base assembly 42 is curved to support and provide stability for pipe 15 and base cradle 27. Base assembly 42 further includes cavity 44 into which pipe trunnion stop 21 along with axial stop insulation 51, lateral stop structural insulation 53, and vertical stop structural insulation 55 fit. Support fins 45 are also illustrated on base assembly 42 to provide additional structural support, and it will be understood that any number and design of support fins may be employed for a particular purpose. Base assembly 42 fits onto base assembly support 61 as shown in Figure 1 and includes external axial stops 65 and external lateral stops 67 to provide additional axial and lateral support to deter movement of pipe 15. In the field, base assembly support 61 is often pre-existing and base assembly 42 is attached to base assembly support 61 by, in the illustrated embodiment, welding.

As illustrated in the preferred embodiment, pipe trunnion stop 21 provides improved lateral, axial and vertical support while maintaining insulation for pipe 15. It will be appreciated that the particular insulation used is not part of the invention and any appropriate insulation material may be used. In the preferred embodiment shown, a thin insulation based on aerogel may be employed including insulation sold under the trademark Cryogel®.

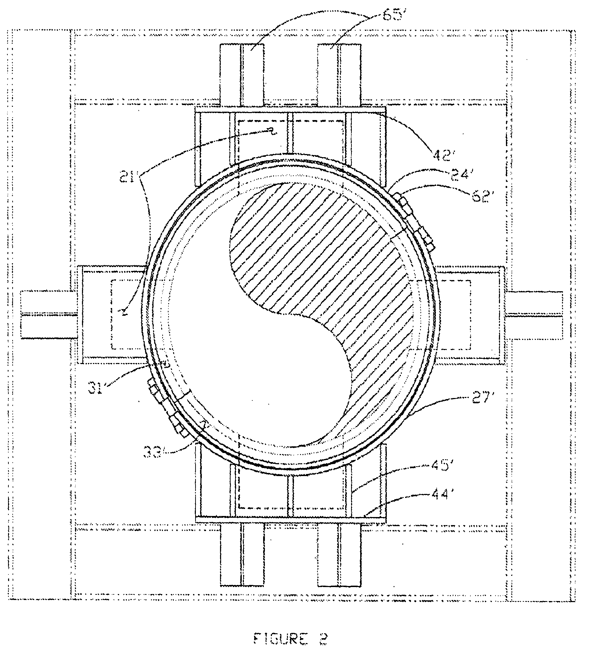

Turning next to Figure 2, there is shown a front view of a pipe anchor in accordance with another preferred embodiment of the present invention. Similar elements of Figure 1, described above, are labelled with similar number labels for consistency, though with a prime after the number label. The embodiment of Figure 2 shows four pipe trunnion stops 21' positioned around the circumference of the pipe at approximately 0°, 90°, 180°, and 270°. It will be appreciated by those in the art that any one, two, three or all four pipe trunnion stops 21' may be used and can be positioned at any location about the pipe circumference, as is appropriate for the particular environment and use desired. To accommodate four pipe trunnion stops 21', bolt assembly 62' is offset at approximately 45° for the horizontal, though any appropriate positioning may be employed. Depending upon the number and location of pipe trunnion stops 21', the number and location of cradle pass-through voids, as well as insulation pass-through voids and base assemblies and respective voids 44' will also be adjusted. As noted above, encircling metal brackets, straps or straps to affix circumferential metal casing may be employed without departing from the spirit and scope of the invention,

While the invention has been described in connection with a preferred embodiment, it is not intended to limit the scope of the invention to the particular form set forth, but on the contrary, it is intended to cover such alternatives, modifications, and equivalents as may be included within the scope of the invention as defined by the appended claims.

## Claims

1. A pipe anchor assembly (10) comprising:
a) a pipe trunnion stop (21) having sides and bottom for attaching to an outer surface of a pipe (15);
b) mating top cradle (24) and bottom cradle (27) portions to generally encircle and hold a length of said pipe;
c) a pass-through (29) in the bottom cradle portion (27) to allow the pipe trunnion stop (21) to pass through;
d) a base (42) onto which said bottom cradle portion (27) sets, the base including a void (44) into which the pipe trunnion stop (21) is secured; and
e) an insulation layer (51, 53, 55) positioned on one or more sides of the pipe trunnion stop (21).

2. A pipe anchor assembly as claimed in claim 1 further comprising:
a) an insulation layer (33) positioned between the pipe (15) and bottom cradle portion (27) and including a pass-through void (36) to allow the pipe trunnion stop (21) to pass through to the base (42).

3. A pipe anchor assembly as claimed in claim 1 further comprising:
a) an insulation layer (31) positioned between the pipe (15) and top cradle portion (24); and
b) an insulation layer (33) positioned between the pipe (15) and bottom cradle portion (27).

4. A pipe anchor assembly as claimed in claim 1 further comprising:
a) insulation void positioned on all sides and bottom of the pipe trunnion stop (21).

5. A pipe anchor assembly as claimed in claim 1 further comprising:
a) a base support (61) onto which the base (42) is set, the base support (61) having axial stops (65) and lateral stops (67).

6. A pipe anchor assembly as claimed in claim 1 wherein the pipe trunnion stop (21) has a generally rectangular cross-sectional shape.

7. A pipe anchor assembly as claimed in claim 1 wherein the pipe trunnion stop has a generally polygonal cross-sectional shape, and wherein the pipe anchor assembly further comprises
e) an insulation layer (33) positioned between the pipe (15) and bottom cradle portion (27);
f) an insulation layer (51, 53, 55) positioned all sides and bottom of the pipe trunnion stop (21); and
g) a base support (61) having at least two stops (65, 67).

8. A pipe anchor assembly (10) as claimed in claim 1, comprising a plurality of pipe trunnion stops (21) having sides and bottom for attaching to an outer surface of a pipe, a pass-through (29) for each pipe trunnion stop (21) to allow the pipe trunnion stops (21) to pass through and a void (44) for each of the pipe trunnion stops (21), and wherein the pipe anchor assembly further comprises:
e) an insulation layer (31, 33) positioned between the pipe (15) and the top cradle (24) and bottom cradle (27) portions; and
f) an insulation layer (51, 53, 55) positioned on all sides and bottom of each of the pipe trunnion stops (21).

9. A pipe anchor assembly as claimed in claim 1 or claim 8 further comprising:
a) a bolting assembly (25) on the top cradle portion (24); and
b) a mating bolting assembly (62) on the bottom cradle portion (27) for securing the top cradle portion (24) and the bottom cradle portion (27) to each other.

10. A pipe anchor assembly as claimed in claim 9 further comprising:
a) an insulation layer (33) positioned between the pipe (15) and bottom cradle portion (27) and including a pass-through void (36) for each of the one or more pipe trunnion stops (21) to allow the pipe trunnion stop (21) to pass through to the base (42).

11. A pipe anchor assembly as claimed in claim 8 further comprising:
c) an insulation layer (51, 53, 55) positioned on one or more sides of each of the one or more pipe trunnion stops (21).

12. A pipe anchor assembly as claimed in claim 8 further comprising:
a) an insulation void positioned on all sides and bottom of each of the one or more pipe trunnion stops (21).

13. A pipe anchor assembly as claimed in claim 1 or claim 10 further comprising:
a) an insulation layer (31) positioned between the pipe (15) and top cradle portion (24).

14. A pipe anchor assembly (10) as claimed in claim 1, further comprising:
e) at least one strap to generally encircle and hold a length of the pipe and which sets on said base (42);
f) a void (44) in the base (42) into which the pipe trunnion stop (21) is secured; and
g) an insulation void positioned around said trunnion stop in said base void.

15. A pipe anchor assembly as claimed in claim 14 further comprising:
a) a pass through opening on said strap, or
wherein said pipe trunnion stop (21) is generally rectangular, or
wherein said base (42) is fixedly attached to a base support (61), or
further comprising:
a) insulation (51, 53, 55) positioned about said trunnion stop (21).

16. A pipe anchor assembly as claimed in claim 1, wherein the pipe trunnion stop has a generally circular, oval or elliptical cross-sectional shape.

## Patentansprüche

1. Rohrankeranordnung (10), die Folgendes umfasst:
a) einen Rohrlageranschlag (21) mit Seiten und einem Boden zum Anbringen an einer äußeren Oberfläche eines Rohrs (15);
b) einen oberen Aufnahmeabschnitt (24) und einen unteren Aufnahmeabschnitt (27), die zusammenpassen, um allgemein ein Stück des Rohrs zu umschließen und zu halten;
c) einen Durchgang (29) in dem unteren Aufnahmeabschnitt (27), um den Rohrlageranschlag (21) hindurch gelangen zu lassen;
d) eine Basis (42), auf der der untere Aufnahmeabschnitt (27) sitzt, wobei die Basis eine Aussparung (44) umfasst, in der der Rohrlageranschlag (21) befestigt ist; und
e) eine Wärmedämmschicht (51, 53, 55), die auf einer oder mehreren Seiten des Rohrlageranschlags (21) positioniert ist.

2. Rohrankeranordnung nach Anspruch 1, die weiter Folgendes umfasst:
a) eine Wärmedämmschicht (33), die zwischen dem Rohr (15) und dem unteren Aufnahmeabschnitt (27) positioniert ist und eine Durchgangsaussparung (36) umfasst, um den Rohrlageranschlag (21) zu der Basis (42) hindurch gelangen zu lassen.

3. Rohrankeranordnung nach Anspruch 1, die weiter Folgendes umfasst:
a) eine Wärmedämmschicht (31), die zwischen dem Rohr (15) und dem oberen Aufnahmeabschnitt (24) positioniert ist; und
b) eine Wärmedämmschicht (33), die zwischen dem Rohr (15) und dem unteren Aufnahmeabschnitt (27) positioniert ist.

4. Rohrankeranordnung nach Anspruch 1, die weiter Folgendes umfasst:
a) eine Wärmedämmungsaussparung, die auf allen Seiten und dem Boden des Rohrlageranschlags (21) positioniert ist.

5. Rohrankeranordnung nach Anspruch 1, die weiter Folgendes umfasst:
a) eine Basisstütze (61), auf der die Basis (42) sitzt, wobei die Basisstütze (61) axiale Anschläge (65) und laterale Anschläge (67) aufweist.

6. Rohrankeranordnung nach Anspruch 1, wobei der Rohrlageranschlag (21) eine allgemein rechteckige Querschnittsform aufweist.

7. Rohrankeranordnung nach Anspruch 1, wobei der Rohrlageranschlag eine allgemein vieleckige Querschnittsform aufweist, und wobei die Rohrankeranordnung weiter Folgendes umfasst:
e) eine Wärmedämmschicht (33), die zwischen dem Rohr (15) und dem unteren Aufnahmeabschnitt (27) positioniert ist;
f) eine Wärmedämmschicht (51, 53, 55), die auf allen Seiten und dem Boden des Rohrlageranschlags (21) positioniert ist; und
g) eine Basisstütze (61) mit mindestens zwei Anschlägen (65, 67).

8. Rohrankeranordnung (10) nach Anspruch 1, umfassend eine Vielzahl von Rohrlageranschlägen (21) mit Seiten und einem Boden zum Anbringen an einer äußeren Oberfläche eines Rohrs, einen Durchgang (29) für jeden Rohrlageranschlag (21), um die Rohrlageranschläge (21) hindurch gelangen zu lassen, und eine Aussparung (44) für jeden der Rohrlageranschläge (21), und wobei die Rohrankeranordnung weiter Folgendes umfasst:
e) eine Wärmedämmschicht (31, 33), die zwischen dem Rohr (15) und dem oberen Aufnahmeabschnitt (24) und dem unteren Aufnahmeabschnitt (27) positioniert ist; und
f) eine Wärmedämmschicht (51, 53, 55), die auf allen Seiten und dem Boden von jedem der Rohrlageranschläge (21) positioniert ist.

9. Rohrankeranordnung nach Anspruch 1 oder Anspruch 8, die weiter Folgendes umfasst:
a) eine Verschraubungsanordnung (25) am oberen Aufnahmeabschnitt (24); und
b) eine damit zusammenpassende Verschraubungsanordnung (62) am unteren Aufnahmeabschnitt (27), um den oberen Aufnahmeabschnitt (24) und den unteren Aufnahmeabschnitt (27) aneinander zu befestigen.

10. Rohrankeranordnung nach Anspruch 9, die weiter Folgendes umfasst:
a) eine Wärmedämmschicht (33), die zwischen dem Rohr (15) und dem unteren Aufnahmeabschnitt (27) positioniert ist und eine Durchgangsaussparung (36) für jeden des einen oder der mehreren Rohrlageranschläge (21) umfasst, um die Rohrlageranschläge (21) zu der Basis (42) hindurch gelangen zu lassen.

11. Rohrankeranordnung nach Anspruch 8, die weiter Folgendes umfasst:
c) eine Wärmedämmschicht (51,53, 55), die auf einer oder mehreren Seiten von jedem des einen oder der mehreren Rohrlageranschläge (21) positioniert ist.

12. Rohrankeranordnung nach Anspruch 8, die weiter Folgendes umfasst:
a) eine Wärmedämmungsaussparung, die auf allen Seiten und dem Boden von jedem des einen oder der mehreren Rohrlageranschläge (21) positioniert ist.

13. Rohrankeranordnung nach Anspruch 1 oder Anspruch 10, die weiter Folgendes umfasst:
a) eine Wärmedämmschicht (31), die zwischen dem Rohr (15) und dem oberen Aufnahmeabschnitt (24) positioniert ist.

14. Rohrankeranordnung (10) nach Anspruch 1, die weiter Folgendes umfasst:
e) mindestens ein Band, um ein Stück des Rohrs allgemein zu umschließen und zu halten und das auf der Basis (42) sitzt;
f) eine Aussparung (44) in der Basis (42), in der der Rohrlageranschlag (21) befestigt ist; und
g) eine Wärmedämmungsaussparung, die um den Lageranschlag in der Basisaussparung positioniert ist.

15. Rohrankeranordnung nach Anspruch 14, die weiter Folgendes umfasst:
a) eine Durchgangsöffnung an dem Band, oder
wobei der Rohrlageranschlag (21) allgemein rechteckig ist, oder
wobei die Basis (42) fest an einer Basisstütze (61) angebracht ist, oder
weiter umfassend:
a) Wärmedämmung (51, 53, 55), die um den Lageranschlag (21) positioniert ist.

16. Rohrankeranordnung nach Anspruch 1, wobei der Rohrlageranschlag eine allgemein kreisförmige, ovale oder elliptische Querschnittsform aufweist.

## Revendications

1. Ensemble d'ancrage de tuyau (10) comportant :
a) un arrêt de tourillon de tuyau (21) ayant des côtés et un fond à des fins de fixation sur une surface extérieure d'un tuyau (15) ;
b) des parties correspondantes formant berceau supérieur (24) et berceau inférieur (27) servant à généralement encercler et tenir une longueur dudit tuyau ;
c) un passage traversant (29) dans la partie formant berceau inférieur (27) permettant à l'arrêt de tourillon de tuyau (21) de passer au travers ;
d) une base (42) sur laquelle ladite partie formant berceau inférieur (27) se pose, la base comprenant un vide (44) dans lequel l'arrêt de tourillon de tuyau (21) est assujetti ; et
e) une couche d'isolation (51, 53, 55) positionnée sur un ou plusieurs côtés de l'arrêt de tourillon de tuyau (21).

2. Ensemble d'ancrage de tuyau selon la revendication 1, comportant par ailleurs :
a) une couche d'isolation (33) positionnée entre le tuyau (15) et la partie formant berceau inférieur (27) et comprenant un vide de passage traversant (36) permettant à l'arrêt de tourillon de tuyau (21) de passer au travers jusqu'à la base (42).

3. Ensemble d'ancrage de tuyau selon la revendication 1, comportant par ailleurs :
a) une couche d'isolation (31) positionnée entre le tuyau (15) et la partie formant berceau supérieur (24) ; et
b) une couche d'isolation (33) positionnée entre le tuyau (15) et la partie formant berceau inférieur (27).

4. Ensemble d'ancrage de tuyau selon la revendication 1, comportant par ailleurs :
a) un vide d'isolation positionné sur tous les côtés et le fond de l'arrêt de tourillon de tuyau (21).

5. Ensemble d'ancrage de tuyau selon la revendication 1, comportant par ailleurs :
a) un support de base (61) sur lequel la base (42) est posée, le support de base (61) ayant des arrêts axiaux (65) et des arrêts latéraux (67).

6. Ensemble d'ancrage de tuyau selon la revendication 1, dans lequel l'arrêt de tourillon de tuyau (21) a une forme transversale généralement rectangulaire.

7. Ensemble d'ancrage de tuyau selon la revendication 1, dans lequel l'arrêt de tourillon de tuyau a une forme transversale généralement polygonale, et dans lequel l'ensemble d'ancrage de tuyau comporte par ailleurs
e) une couche d'isolation (33) positionnée entre le tuyau (15) et la partie formant berceau inférieur (27) ;
f) une couche d'isolation (51, 53, 55) positionnée sur tous les côtés et le fond de l'arrêt de tourillon de tuyau (21) ; et
g) un support de base (61) ayant au moins deux arrêts (65, 67).

8. Ensemble d'ancrage de tuyau (10) selon la revendication 1, comportant une pluralité d'arrêts de tourillon de tuyau (21) ayant des côtés et un fond à des fins de fixation sur une surface extérieure d'un tuyau, un passage traversant (29) pour chaque arrêt de tourillon de tuyau (21) permettant aux arrêts de tourillon de tuyau (21) de passer au travers et un vide (44) pour chacun des arrêts de tourillon de tuyau (21), et dans lequel l'ensemble d'ancrage de tuyau comporte par ailleurs :
e) une couche d'isolation (31,33) positionnée entre le tuyau (15) et les parties formant berceau supérieur (24) et berceau inférieur (27) ; et
f) une couche d'isolation (51, 53, 55) positionnée sur tous les côtés et le fond de chacun des arrêts de tourillon de tuyau (21).

9. Ensemble d'ancrage de tuyau selon la revendication 1 ou la revendication 8, comportant par ailleurs :
a) un ensemble de boulonnage (25) sur la partie formant berceau supérieur (24) ; et
b) un ensemble de boulonnage correspondant (62) sur la partie formant berceau inférieur (27) à des fins d'assujettissement de la partie formant berceau supérieur (24) et de la partie formant berceau inférieur (27) l'une par rapport à l'autre.

10. Ensemble d'ancrage de tuyau selon la revendication 9, comportant par ailleurs :
a) une couche d'isolation (33) positionnée entre le tuyau (15) et la partie formant berceau inférieur (27) et comprenant un vide de passage traversant (36) pour chacun desdits un ou plusieurs arrêts de tourillon de tuyau (21) pour permettre à l'arrêt de tourillon de tuyau (21) de passer au travers jusqu'à la base (42).

11. Ensemble d'ancrage de tuyau selon la revendication 8, comportant par ailleurs :
c) une couche d'isolation (51, 53, 55) positionnée sur un ou plusieurs côtés de chacun desdits un ou plusieurs arrêts de tourillon de tuyau (21).

12. Ensemble d'ancrage de tuyau selon la revendication 8, comportant par ailleurs :
a) un vide d'isolation positionné sur tous les côtés et le fond de chacun desdits un ou plusieurs arrêts de tourillon de tuyau (21).

13. Ensemble d'ancrage de tuyau selon la revendication 1 ou la revendication 10, comportant par ailleurs :
a) une couche d'isolation (31) positionnée entre le tuyau (15) et la partie formant berceau supérieur (24).

14. Ensemble d'ancrage de tuyau (10) selon la revendication 1, comportant par ailleurs :
e) au moins une sangle servant à généralement encercler et tenir une longueur du tuyau et qui se pose sur ladite base (42) ;
f) un vide (44) dans la base (42) dans lequel l'arrêt de tourillon de tuyau (21) est assujetti ; et
g) un vide d'isolation positionné autour dudit arrêt de tourillon dans ledit vide de la base.

15. Ensemble d'ancrage de tuyau selon la revendication 14, comportant par ailleurs :
a) une ouverture de passage traversant sur ladite sangle, ou
dans lequel ledit arrêt de tourillon de tuyau (21) est généralement rectangulaire, ou dans lequel ladite base (42) est attachée de manière fixe à un support de base (61), ou comportant par ailleurs :
a) une isolation (51, 53, 55) positionnée autour dudit arrêt de tourillon (21).

16. Ensemble d'ancrage de tuyau selon la revendication 1, dans lequel l'arrêt de tourillon de tuyau a une forme transversale généralement circulaire, ovale ou elliptique.
